# EUROPÄISCHE PATENTANMELDUNG

(11) **EP 1 731 639 A2**
(43) Veröffentlichungstag der Anmeldung: **13.12.2006**
(21) Anmeldenummer: 06010294.4
(22) Anmeldetag: 18.05.2006
(51) Int. Cl.: D02G 3/44, B60R 21/16

(54) **Gassack**

(30) Priorität: 07.06.2005 DE 202005008939 U
(71) Anmelder: TRW Automotive Safety Systems GmbH, 63743 Aschaffenburg (DE)
(72) Erfinder: Britz, Thomas, Dr., 63856 Bessenbach (DE)
(74) Vertreter: Sulzbach, Werner

(57) **Zusammenfassung**

Die Erfindung betrifft einen Gassack zur Verwendung in einem Fahrzeuginsassen-Rückhaltesystem, mit wenigstens einer Wandung oder einem Wandungsteil aus einem Gewebe, das aus Fasern gebildet ist. Die Fasern weisen eine Polymermatrix mit darin verteilten Cellulosefibrillen auf.

## Beschreibung

Die Erfindung betrifft einen Gassack zur Verwendung in einem Fahrzeuginsassen-Rückhaltesystem, mit wenigstens einer Wandung oder einem Wandungsteil aus einem Gewebe, das aus Fasern gebildet ist.

Gassackmodule werden in Fahrzeuge eingebaut, um im Falle eines Fahrzeugunfalls die kinetische Energie der Fahrzeuginsassen zu reduzieren und die Fahrzeuginsassen vor dem Aufprall auf harte Fahrzeuginnenteile, wie beispielsweise das Lenkrad oder die Seitenverkleidung der Fahrzeugtüren, zu schützen. Wenn eine an das Gassackmodul angeschlossene Sensorik einen Unfall des Fahrzeugs erkennt, wird innerhalb des Gasgenerators ein meist in Tablettenform vorliegender Treibstoff aktiviert, der in dem Brennkammergehäuse unter einem hohen Druck abbrennt und so ein Heißgas erzeugt, welches innerhalb weniger Millisekunden einem Gassack zugeführt wird und diesen aufbläst.

Beim Aufblasen des Gassacks wirken in der Regel für einen kurzen Zeitraum sehr hohe Temperaturen und Drücke auf das Gassackgewebe ein. Außerdem können in dem Heißgas enthaltene Partikel auf das Gassackgewebe auftreffen. Um das Gassackgewebe vor einer Beschädigung zu schützen, sind aufwendige Maßnahmen nötig. Heutzutage werden deshalb Gassackgewebe aus Polyamid- oder Polyesterfäden verwendet, die ganz oder teilweise mit Silikon oder Neopren beschichtet sind. Diese beschichteten Gewebe weisen jedoch ein hohes Flächengewicht auf und lassen sich schlecht falten. Aus diesem Grund werden die Gassäcke für Fahrzeuginsassen-Rückhaltesysteme zunehmend aus unbeschichteten Geweben hergestellt. Bei diesen Gassäcken müssen jedoch die thermisch hochbelasteten Wandungsteile, wie die an die Einblasöffnung angrenzenden Bereiche des Gassackgewebes, durch besondere Maßnahmen vor einer Beschädigung durch heiße Gase und Partikel geschützt werden.

Es wurde bereits vorgeschlagen, die Innenseite eines Gassacks mit wärmeabsorbierenden Mitteln, wie beispielsweise einer Folienbeschichtung oder anderen Opfermaterialien zu versehen. Diese Opfermaterialien werden durch die in den Gassack einströmenden heißen Gase aufgeschmolzen oder zersetzt und sollen so die eigentliche Gassackwandung vor einer Beschädigung schützen. So ist beispielsweise aus der DE 198 30 149 ein Gassack bekannt, bei dem auf die Innenwand des Gassackgewebes Natriumhydrogencarbonatpulver aufgebracht ist, welches durch Einwirkung der heißen Gase ab einer Temperatur von ca. 180°C unter Bildung von Kohlendioxid zersetzt wird. Ein Gassack, bei dem ein thermoplastisches Elastomer auf die Innenwand des Gassackgewebes aufgebracht ist, ist in der JP-A-05338092 beschrieben.

Die Erfindung stellt demgegenüber einen Gassack bereit, bei dem ohne Opferlagen oder zusätzliche Beschichtungen des Gassackgewebes ein hinreichender Schutz vor der Einwirkung heißer Gase oder Partikel erreicht wird.

Der erfindungsgemäße Gassack ist zur Verwendung in einem Fahrzeuginsassen-Rückhaltesystem vorgesehen und umfaßt wenigstens eine Wandung oder einen Wandungsteil aus einem Gewebe, das aus Fasern gebildet ist. Der Gassack ist dadurch gekennzeichnet, daß die Fasern eine Polymermatrix mit darin verteilten Cellulosefibrillen aufweisen.

Die in der Polymermatrix verteilten Cellulosefibrillen dienen bei einem aktivierten Gasgenerator als ein in das Gassackgewebe integrierter Flammschutz. Wird der Gasgenerator bei einem Fahrzeugunfall aktiviert, so wird in einer Brennkammer des Gasgenerators ein Heißgas erzeugt, das den Gassack aufbläst. Ist das aus der Brennkammer ausströmende Gas aber zu heiß bzw. tritt eine lokale Überhitzung des Gassackgewebes durch Heißgas oder heiße Partikel auf, so pyrolysieren die in der Polymermatrix verteilten unschmelzbaren Cellulosefibrillen und bilden eine Kohlenstoffschicht auf dem Gassackgewebe. Diese Kohlenstoffschicht weist aber wie Graphit eine Hochtemperaturfestigkeit auf und schützt dadurch das Gassackgewebe vor dem Heißgas. Es muß deshalb kein Gewebe verwendet werden, welches durch eine Beschichtung oder andere technische Maßnahmen gegen eine Beschädigung durch die auftreffenden heißen Gase oder Partikel geschützt ist. Die unbeschichteten Gewebe sind zudem kostengünstiger und lassen sich aufgrund ihrer besseren Flexibilität leichter falten.

Cellulosefibrillen bilden den Hauptbestanteil der Zellwand von Holz und Baumwolle und sind für die hohe Zugfestigkeit von Baumwollfasern und Holz verantwortlich. Die Herstellung der Cellulosefibrillen kann beispielsweise gemäß dem in der DE 196 28 324 beschriebenen Verfahren erfolgen. Bei diesem Verfahren werden die Cellulosefibrillen durch mechanische Behandlung, wie Mahlen, Kneten oder Extrudieren, aus den Cellulosefasern herausgelöst. Das Mahlen führt neben der Herauslösung der Fibrillen stets zu einer gewissen Verkürzung des Ausgangsmaterials. Bei den Knet- und Extrudierverfahren beruht das Zerlegen von Fasern in Fibrillen vorwiegend auf Reibung. Eine Fibrillenverkürzung tritt, wenn überhaupt, in weit geringerem Maße als beim Mahlen auf.

Der erfindungsgemäße Gassack ist bevorzugt aus einem Gewebe gebildet, bei dem die Cellulosefibrillen in den Gewebefasern in einem Anteil von 0,1 bis 15 Gewichtsteilen pro hundert Gewichtsteilen der Polymermatrix vorliegen. In der Polymermatrix bewirken die Cellulosefibrillen eine erhebliche Zunahme der Zugfestigkeit des Gassackgewebes im Vergleich zu einem Gassackgewebe aus einer reinen Polymermatrix. Das üblicherweise als Gassackgewebe verwendete Polyamid kann daher auch durch ein anderes Polymer ersetzt werden, das ungünstigere Zugfestigkeitswerte als das Polyamid aufweist. Es kann aber auch die dtex-Zahl der Polyamidfaser reduziert werden. Tex ist die internationale Feinheitsbezeichnung für textile Fasern und gibt das Gewicht in Gramm pro 1000 m Lauflänge an. Dtex steht für das Gewicht in Gramm bei 10.000 m Lauflänge. Je höher die dtex-Zahl ist, desto gröber ist die Faser. In den zur Herstellung des Gassackgewebes verwendeten Garnen weisen die erfindungsgemäßen Polymerfasern vorzugsweise eine Einzelfadenfeinheit von bis zu 10 dtex, bevorzugt zwischen 1,5 und 3,5 dtex auf.

Bevorzugt weisen die Cellulosefibrillen einen mittleren Durchmesser von etwa 2 bis 100 nm und eine mittlere Länge von etwa 1 bis 10 µm auf.

Das Verhältnis von Länge zu Durchmesser (Aspektverhältnis) der Cellulosefibrillen ist vorzugsweise größer als 60. Das Aspektverhältnis ist ein Maß für das Bindungsvermögen der Fibrillen untereinander. Weisen Fibrillen ein geringes Aspektverhältnis auf, so ist die Überlappung der Fibrillen gering und das Bindungsvermögen schlecht. Polymere mit darin eingebetteten Cellulosefibrillen, die ein hohes Aspektverhältnis aufweisen und dadurch ein hohes Bindungsvermögen haben, weisen üblicherweise eine besonders hohe Reißfestigkeit auf.

Besonders bevorzugt ist das Verhältnis von Länge zu Durchmesser der Cellulosefibrillen daher größer als 200.

Die Polymermatrix ist vorzugsweise aus der Gruppe der thermoplastischen Polymere und thermoplastischen Elastomere ausgewählt, und besonders bevorzugt aus der aus Polyester, Polyharnstoff, Polyurethan und Polyamid bestehenden Gruppe.

Die Fasern aus der Polymermatrix mit den darin verteilten Cellulosefibrillen können durch an sich bekannte Extrusions- und/oder Spinnverfahren hergestellt werden.

Das erfindungsgemäße Gassackgewebe ist ferner vorzugsweise unbeschichtet. Unbeschichtete Gassackgewebe sind im Vergleich zu beschichteten Geweben kostengünstiger und lassen sich aufgrund ihrer besseren Flexibilität leichter falten.

Der erfindungsgemäße Gassack ist insbesondere zur Verwendung in einem Gassackmodul für die Fahrerseite eines Fahrzeuginsassen-Rückhaltesytems vorgesehen. Die Erfindung ist jedoch nicht auf diese Verwendung beschränkt; sie kann auch auf andere Gassackkonfigurationen angewendet werden, wie beispielsweise auf einen Beifahrer-Gassack oder einen Kopf-Seitengassack.

## Patentansprüche

1. Gassack zur Verwendung in einem Fahrzeuginsassen-Rückhaltesystem, mit wenigstens einer Wandung oder einem Wandungsteil aus einem Gewebe, das aus Fasern gebildet ist, **dadurch gekennzeichnet, daß** die Fasern eine Polymermatrix mit darin verteilten Cellulosefibrillen aufweisen.

2. Gassack nach Anspruch 1, **dadurch gekennzeichnet, daß** die Cellulosefibrillen in einem Anteil von 0,1 bis 15 Gewichtsteilen pro 100 Gewichtsteilen der Polymermatrix vorliegen.

3. Gassack nach Anspruch 1 oder 2, **dadurch gekennzeichnet, daß** die Cellulosefibrillen einen mittleren Durchmesser von etwa 2 bis 100 nm und einen mittlere Länge von etwa 1 bis 10 µm aufweisen.

4. Gassack nach einem der vorhergehenden Ansprüche, **dadurch gekennzeichnet, daß** das Verhältnis von Länge zu Durchmesser der Cellulosefibrillen größer als 60 ist.

5. Gassack nach einem der vorhergehenden Ansprüche, **dadurch gekennzeichnet, daß** das Verhältnis von Länge zu Durchmesser der Cellulosefibrillen größer als 200 ist.

6. Gassack nach einem der vorhergehenden Ansprüche, **dadurch gekennzeichnet, daß** die Polymermatrix aus der Gruppe der thermoplastischen Polymere und thermoplastischen Elastomere ausgewählt ist.

7. Gassack nach einem der vorhergehenden Ansprüche, **dadurch gekennzeichnet, daß** die Polymermatrix aus der aus Polyester, Polyharnstoff, Polyurethan und Polyamid bestehenden Gruppe ausgewählt ist.

8. Gassack nach einem der vorhergehenden Ansprüche, **dadurch gekennzeichnet, daß** das Gewebe unbeschichtet ist.
